# EUROPÄISCHE PATENTSCHRIFT

(11) **EP 0 493 774 B1**
(45) Veröffentlichungstag und Bekanntmachung des Hinweises auf die Patenterteilung: **03.05.1995**
(21) Anmeldenummer: 91122081.2
(22) Anmeldetag: 21.12.1991
(51) Int. Cl.: B60J 5/04, B29C 67/24

(54) **Kabinentür für eine Fahrzeugkabine**
Door for vehicle cab
Porte pour cabine de véhicule

(30) Priorität: 04.01.1991 US 638310
(43) Veröffentlichungstag der Anmeldung: 08.07.1992
(73) Patentinhaber: DEERE & COMPANY, Moline, Illinois 61265 (US)
(72) Erfinder: Smith, Richard Jon, Dubuque, Iowa 52001 (US); Kiefer, Edward Herman, Dubuque, Iowa 52001 (US); Tindall, Gary Warren, Hazel Green, Wisconsin 53811 (US)
(74) Vertreter: Feldmann, Bernhard

(56) Entgegenhaltungen:
- EP-A- 0 332 495
- FR-A- 1 597 263
- US-A- 5 034 173
- ADVANCED MATERIALS & PROCESSES Bd. 130, Nr. 6,Dezember 1986, USA ALLEN J. KLEIN: 'reaction injection molding'

## Beschreibung

Die Erfindung bezieht sich auf eine Kabinentür für eine Fahrzeugkabine, die Rahmenteile aufweist, die zumindest teilweise eine Türöffnung mit einem vertikal verlaufenden Element an einer Seite der Türöffnung und einem oberen horizontal verlaufenden Element über der Türöffnung definieren, wobei die Kabinentür einen metallischen und im wesentlichen nach innen offenen äußeren Türrahmen mit einem im wesentlichen vertikal verlaufenden ersten und zweiten Seitenteil aufweist und über Scharniere an die Rahmenteile der Fahrzeugkabine schwenkbar angeschlagen ist.

Derartige Fahrzeugkabinen finden bei Ackerschleppern und bei Fahrzeugen, die in der Bauwirtschaft eingesetzt werden, wie bei Baggerladern, Verwendung. Moderne Fahrzeugkabinen sollen der Bedienungsperson eine Rundumsicht verleihen, und für eine gute Ventilation, was insbesondere beim stationären Einsatz in der Bauwirtschaft von Bedeutung ist, lassen sich im Einsatz bis zu 55 % der Fensterflächen öffnen. Bei der Fahrzeugkabine, zu der die in dem Dokument US-A-3 802 530 beschriebene Kabinentür gehört, ist dies ebenfalls der Fall. Die Kabinentür reicht bis in den Bereich der Windschutzscheibe, die sich damit beim Vorhandensein nur einer Tür teilweise öffnen läßt. Ist eine rechte und eine linke Tür vorhanden, so läßt sich die Windschutzscheibe ganz öffnen. Derartige Kabinentüren sind gebogen ausgebildet und nicht einfach zu fertigen. Ihr Stahlrahmen ist geschweißt und für ein ansprechendes Äußeres, aber auch um scharfe Kanten und damit Verletzungsgefahren des Bedienungspersonals zu vermeiden, müssen die Schweißnähte bearbeitet werden, bevor die Kabinentür gespritzt werden kann. Bei dem rauhen Einsatz solcher Fahrzeuge treten bald zumindest Kratzer im Lack auf. Die großräumigen Fensterteile werden an dem Türrahmen befestigt.

Die mit der Erfindung zu lösende Aufgabe wird darin gesehen, derartige Kabinentüren vorteilhafter auszubilden. Diese Aufgabe ist nach der Erfindung dadurch gelöst, daß der Türrahmen durch Gießen von einem Kunststoff umgeben ist, der innere großflächige Fensteröffnungen bildet, wobei dieser Kunststoffmantel Auflageflächen aufweist, mit denen die transparenten Fenstermittel verbunden sind.

Auf diese Weise erhält man eine formstabile Kabinentür, deren Schweißnähte von dem Kunststoff umgeben sind. Die Ummantelung mit Kunststoff erlaubt fast jede Formgestaltung. Ein nachträgliches Spritzen mit Farbe ist nicht erforderlich. Der Kunststoff ist stoß- und kratzfest sowie rostunempfindlich. Von den Scharnieren ausgehende Kräfte werden nach wie vor in den metallischen Rahmen eingeleitet und müssen nicht von der Kunststoffummantelung aufgefangen werden.

Wenn nach einem weiteren Vorschlag der Erfindung der zweite Seitenteil des Türrahmens mit einer Türverriegelung versehen ist, werden auch die von dort aus ausgehenden Kräfte unmittelbar in den Stahlrahmen der Kabinentür eingeleitet.

Eine dauerhafte Ummantelung für die Kabinentür läßt sich dadurch erreichen, daß der Kunststoff ein Polymer und um den Türrahmen gegossen ist.

Zweckmäßig ist das Polymer ein Polyurethan.

Ein besonders guter Schutz für die Fensterscheiben der Kabinentür läßt sich nach einem weiteren Vorschlag der Erfindung dadurch erreichen, daß der den Türrahmen umgebende Kunststoff im Bereich seiner Fensteröffnungen so geformt ist, daß er die Fenstermittel von außen umgibt.

Schließlich wird nach der Erfindung noch vorgeschlagen, daß die Fenstermittel mit dem Kunststoff verklebt sind.

In der Zeichnung ist ein nachfolgend näher erläutertes Ausführungsbeispiel der Erfindung dargestellt. Es zeigt:
- Fig. 1: einen Baggerlader mit einer Fahrzeugkabine in perspektivischer Darstellung,
- Fig. 2: den Stahlrahmen einer Kabinentür in perspektivischer Darstellung,

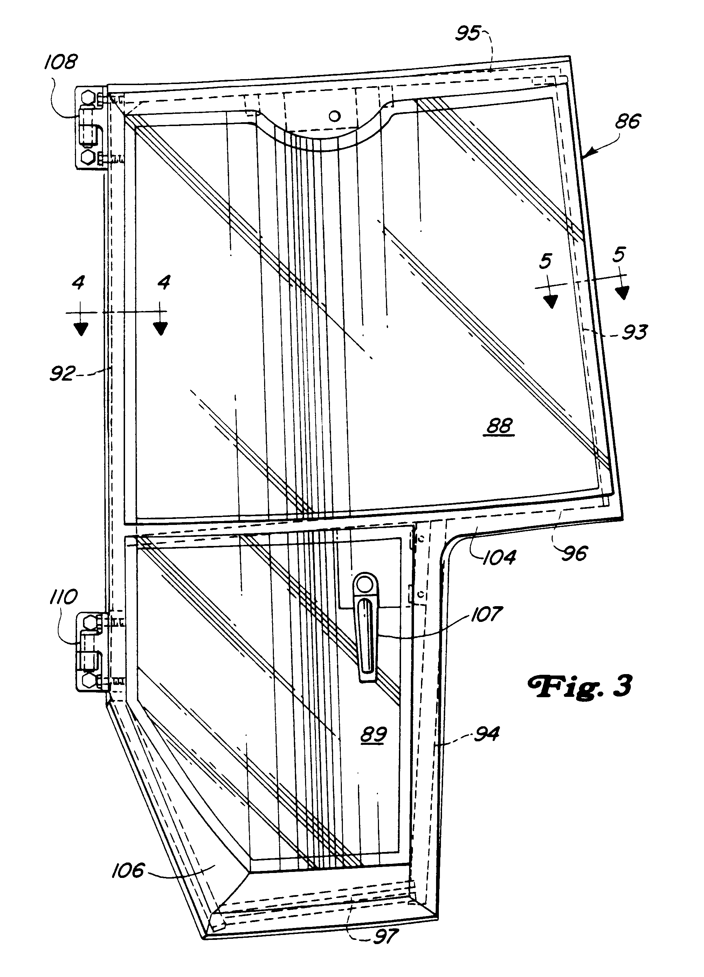

- Fig. 3: eine ähnliche Darstellung wie in Fig. 2, jedoch dem Stahlrahmen mit einer Ummantelung aus Kunststoff zeigend,
- Fig. 4: einen Schnitt nach der Linie 4 : 4 in Fig.3 und
- Fig. 5: einen Schnitt nach der Linie 5:5 in Fig. 3.

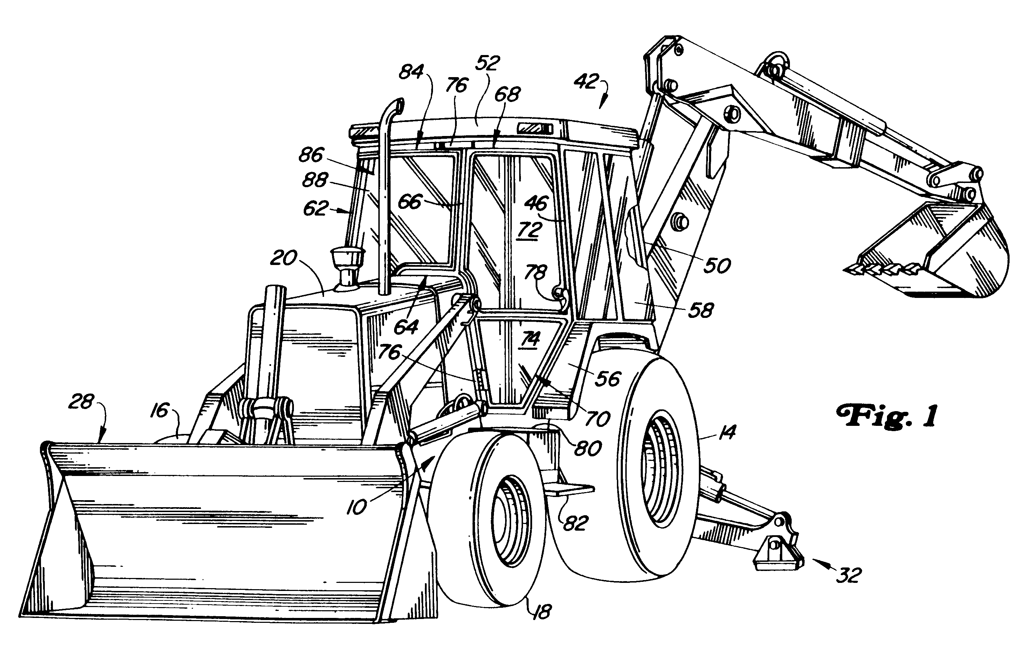

Die Erfindung findet vornehmlich an einem in Fig. 1 dargestellten Baggerlader Verwendung, der einen Fahrzeugrahmen 10 mit rückwärtigen antreibbaren Rädern 14 und frontseitigen lenkbaren Rädern 16 und 18 aufweist. Bekanntlich weisen solche Fahrzeuge einen vorne am Fahrzeugrahmen vorgesehenen und in der Zeichnung nicht dargestellten Verbrennungsmotor auf, der durch eine Motorabdeckung 20 verdeckt ist. Hinter dem Verbrennungsmotor ist ein Getriebe vorgesehen, dessen sich nach rückwärts erstreckende Ausgangswelle die rückwärtigen Räder 14 über ein Differential und rückwärtige Treibachsen antreibt. Das Differential und die Gehäuse für die Treibachsen sind Bestandteil des Fahrzeugrahmens 10.

Eine Steuerkonsole 22 ist im wesentlichen umgekehrt U-förmig ausgebildet und unmittelbar hinter der Motorabdeckung 20 vorgesehen. Sie nimmt ein ebenfalls nicht gezeigtes Steuerrad in der Längsmittelebene des Fahrzeuges auf, in der auch die Motorausgangswelle und die Getriebeausgangswelle liegen.

Solche herkömmliche Baggerlader haben eine frontseitig vorgesehene Ladereinrichtung 28 und eine rückwärtig ebenfalls am Fahrzeugrahmen 10 angeschlossene Baggereinrichtung 30. Bei Arbeiten mit der Baggereinrichtung 30 wird das Fahrzeug über Stabilisierungsstreben 32 am rückwärtigen Ende des Fahrzeugrahmens 10 hochgebockt.

Auf dem Fahrzeugrahmen 10 zwischen dem rechten und linken rückwärtigen Rädern 14 und hinter der Steuerkonsole 22 befindet sich ein Bedienungsstand mit einem horizontal verlaufenden Boden und einem darauf in der Längsmittelebene angeordneten und um 180° verschwenkbaren Sitz, der bei Arbeiten mit der Ladereinrichtung 28 oder bei fahrender Maschine nach vorne gerichtet ist. In dieser Sitzstellung sind Pedale für die Betätigung einer Kupplung oder der Bremsen und Schalthebel für das Getriebe leicht zugänglich. Bei Arbeiten mit der Baggereinrichtung 30 wird der Sitz um 180° nach hinten verschwenkt, so daß die Bedienungsperson die Baggereinrichtung über geeignete Steuerhebel leicht betätigen kann.

Der Bedienungsstand befindet sich innerhalb einer Fahrzeugkabine 42, deren Kabinenrahmen für die Bedienungsperson als Überrollschutz ausgebildet ist. Hierzu weist der Kabinenrahmen vordere im wesentlichen vertikal verlaufende rechte und linke Pfosten 44 und 46 und rückwärtige ebenfalls im wesentlichen vertikal verlaufende Pfosten 50 auf, von denen in der Zeichnung nur der linke erkennbar ist. Die Pfosten tragen ein Kabinendach 52 an ihren oberen Enden und sind an ihren unteren Enden an den Fahrzeugrahmen 10 angeschlagen. Diese Anschlußstellen sind allerdings in der Zeichnung nicht dargestellt.

Die Fahrzeugkabine 42 hat rechte und linke Seitenteile 54, die abgesehen davon, daß sie zueinander spiegelbildlich sind, identisch ausgebildet sind. Nur der linke Seitenteil ist in der Zeichnung erkennbar. Jeder Seitenteil 54 weist eine Radabdeckung 56 auf, die seitwärts nach außen vorsteht und jeweils ein rückwärtiges Rad 14 teilweise abdeckt. Der oberhalb der Radabdeckung 56 liegende Teil der Seitenteile 54 besteht aus zwei im wesentlichen vertikal gerichteten Scheibenteilen 58. Wie ferner aus Fig. 1 der Zeichnung hervorgeht, sind die vorderen Pfosten 44 und 46 in ihrem oberen Bereich nach innen und rückwärts geneigt verlaufend angeordnet, während die oberen Bereiche der rückwärtigen Pfosten 50 nach innen und vorwärts abgeknickt sind, so daß sich die Wände der Kabine nach oben hin verjüngen. Die beiden Scheibenteile 58 an jeder Seite lassen sich öffnen, um die Ventilation der Kabine zu verbessern. An ihrer Rückseite ist die Fahrzeugkabine 42 ebenfalls verglast. Auch diese Scheiben lassen sich ganz oder teilweise öffnen. Die Frontseite 62 der Kabine ist ebenfalls fast vollständig verglast, so daß die Fahrzeugkabine eine hervorragende Rundumsicht gewährleistet.

Die Frontseite 62 ist mit einem umgekehrt U-förmig ausgebildeten Rahmenteil 64 versehen, der die entsprechend ausgebildete Steuerkonsole 22 übergreift. Eine vertikal verlaufende Strebe 66 in der Frontseite 62 erstreckt sich von dem Rahmenteil 64 aus nach oben bis zu dem Kabinendach 52 und ist mit Bezug auf die Längsmittelebene nach links versetzt, um die Sicht der Bedienungsperson nach vorne nicht zu beeinträchtigen. Die Strebe 66 und die linke Kante des Rahmenteils 64 bilden die rechte Seite einer Türöffnung 68, die nach oben durch das Kabinendach 52 abgeschlossen ist. Bodenwärts ist die Türöffnung durch den Boden des Bedienungsstandes begrenzt, wohingegen die linke Seite der Türöffnung 68 durch den oberen Teil des linken vorderen Pfostens 46 und den nach unten und nach vorne geneigt verlaufenden Teil der linken Radabdeckung 56 gebildet ist. In diese Türöffnung 68 ist eine linke Kabinentür 70 eingepaßt, die mit Ausnahme ihres äußeren Türrahmens fast vollständig verglast ist und im wesentlichen aus einem oberen Glaseinsatz 72 und einem unteren Glaseinsatz 74 besteht. Die Kabinentür 70 ist an zwei Vertikalabstand aufweisenden Scharnieren 76 angeschlagen und kann um ihre rechte Seite in eine Offenstellung verschwenken. Das obere Scharnier 76 ist mit der Unterseite des Kabinendaches 52 im Bereich des oberen Endes der Strebe 66 verbunden und das untere Scharnier 76 greift an dem Rahmenteil 64 an. Eine Verriegelung 78 ist noch an der linken Seite der Kabinentür 70 vorgesehen und dient zum wahlweisen Verschließen der Tür mit dem linken vorderen Pfosten 46.

Eine rechte Türöffnung 84 in dem rechten Seitenteil wird ebenfalls durch die Strebe 66, das Kabinendach 52, den rechten vorderen Pfosten 44, der rechten vorderen Kante der rechten Radabdeckung, dem Boden des Bedienungsstandes und der rechten Kante des Rahmenteils 64 begrenzt. In diese Türöffnung 84 ist eine rechte Tür 86 derart eingepaßt, daß sie zwischen ihrer in Fig. 1 gezeigten geschlossenen Stellung um zwei Scharniere 108 und 110 in ihre Offenstellung verschwenken kann, wobei die Scharniere 108 und 110 die rechte Türseite mit dem rechten vorderen Pfosten 44 verbinden. Da die Strebe 66 nach links versetzt ist, die Fahrerkabine 42 aber mit Bezug auf die Längsmittelebene zentriert ist, ist die rechte Kabinentür wesentlich breiter als die linke Kabinentür 70. Auch die rechte Kabinentür 86 besteht im wesentlichen aus einem oberen und einem unteren Fenstermittel 88, 89 in Form von Scheibenteilen. Wie ferner aus Fig. 1 der Zeichnung ersichtlich ist, ist die gesamte Frontseite 62 gewölbt ausgebildet, wobei die konkave Seite dem Fahrersitz zugelegen ist. Die oberen Fenstermittel 72 und 88 der beiden Kabinentüren bilden dabei eine gewölbte Windschutzscheibe, die sich dann beim Türeöffnen ebenfalls öffnet. Die gewölbte Ausbildung der Frontseite verbessert das Erscheinungsbild der Kabine und vergrößert vor allen Dingen den Innenraum. Die besondere Ausbildung der Türen vergrößert den Ein- und Ausstieg.

An dem Fahrzeugrahmen 10 ist noch unmittelbar vor der linken Türöffnung 68 etwas unterhalb des Bodens des Bedienungsstandes ein Ladeplatz 80 mit einer darunter liegenden Trittstufe 82 vorgesehen, wodurch der Einstieg in die Kabine und der Austritt erleichtert werden. Ähnliche Vorkehrungen sind zu demselben Zweck an der rechten Kabinenseite vorgesehen.

Der Aufbau der rechten und linken Kabinentüren ist im wesentlichen derselbe mit der Ausnahme, daß die rechte Kabinentür 86 erheblich breiter ist. Nachfolgend wird deshalb nur auf den Aufbau der rechten Kabinentür 86 im einzelnen eingegangen. Das Herstellungsverfahren für die rechte und die linke Kabinentür ist identisch.

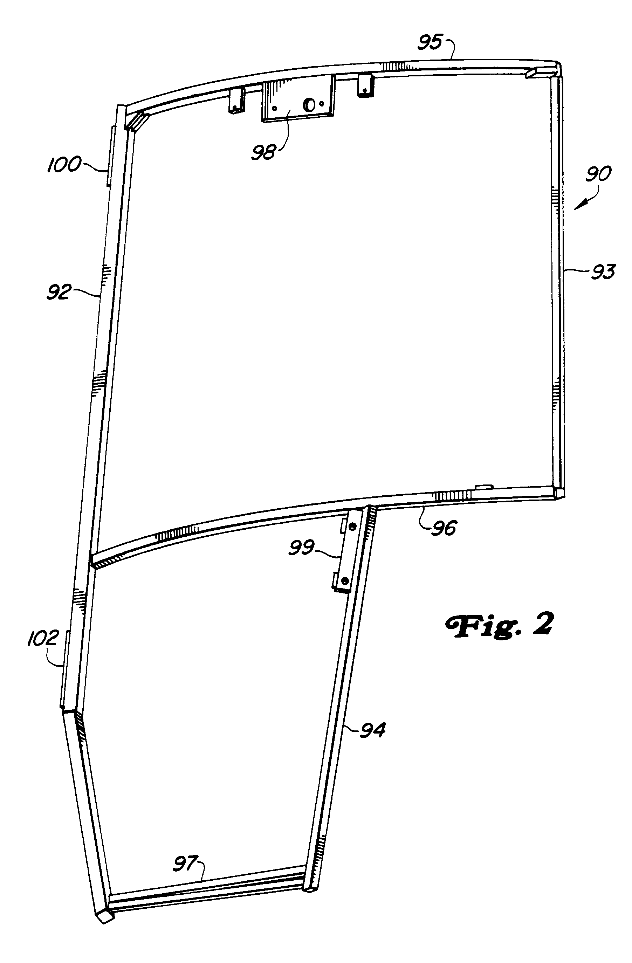

Die rechte Kabinentür weist einen aus Stahl gefertigten Türrahmen 90 auf. Dieser besteht im einzelnen, wie aus Fig. 2 erkennbar ist, aus einem rechten Seitenteil 92, der sich über die gesamte Türlänge erstreckt, einem oberen linken Seitenteil 93 und einem unteren linken Seitenteil 94. Ein oberer Teil 95 verbindet die oberen Enden der rechten und linken Seitenteile 92 und 93, ein horizontaler Mittenteil 96 erstreckt sich zwischen einem mittleren Bereich des rechten Seitenteils 92 und dem unteren Ende des oberen linken Seitenteils 93 und ein Bodenteil 97 verbindet schließlich das untere Ende des rechten Seitenteils 92 mit dem unteren Ende des linken unteren Seitenteils 94. Das obere Ende des unteren linken Seitenteils 94 ist an einem mittigen Bereich des Mittenteils 96 angeschlossen. Hierbei ist das untere Ende des rechten Seitenteils nach innen schräg verlaufend ausgebildet und die horizontal verlaufenden Teile 95 und 96 sind gebogen, wobei deren konkave Seite nach rückwärts gerichtet ist. Bis auf den Mittenteil 96 bilden die Türrahmenteile die äußere Peripherie des Türrahmens 90.

Der Mittenteil 96 teilt die Kabinentür 86 in einen oberen und in einen unteren Teil, wobei der schmalere untere Teil gegenüber dem oberen Teil zur Anpassung an die Steuerkonsole 22 versetzt ist. Der obere linke Seitenteil 93 liegt in der Schließstellung der rechten Kabinentür 86 unmittelbar neben der Strebe 66.

Ein Befestigungsteil 98 zur Aufnahme eines Scheibenwischers ist an den oberen Teil 95 angeschlossen und erstreckt sich von diesem aus gesehen nach unten, während ein Befestigungsteil 99 für eine Verriegelungseinrichtung an das obere Ende des unteren linken Seitenteils 94 angeschlossen ist. Entsprechende Befestigungsmittel und Befestigungsbohrungen sind in den Befestigungsteilen und Scharnierlaschen 100, 102 zur Aufnahme einer Scheibenwischeranlage, einer Türverriegelung 107 und oberer und unterer Scharniere 108 und 110 vorgesehen.

Jeder Türrahmen ist mit einem Mantel 104 aus Polyurethan umhüllt, der durch Gießen auf die Türrahmen aufgebracht wird. Der Kunststoffmantel kann in seiner Formgebung derjenigen der Türrahmen entsprechen mit der Ausnahme eines unteren Teils 106, der den unteren Teil beispielsweise des Türrahmens 90 umgibt und nach außen vorgewölbt ist. Das Gießverfahren ist ein Reaktions- Injektionsverfahren mit einem polyolen Zinkharz und einem isocyanaten Material, die gleichzeitig in die Gießform eingegeben werden, in der sie eine Reaktion eingehen und das fertige Polymer bilden, im vorliegenden Falle das Polyurethan.

Nachdem sich der Kunststoffmantel um den Türrahmen gebildet hat, werden die Fenstermittel 88 und 89 mit dem Kunststoffmantel 104 verbunden, indem ein herkömmliches Bindmittel 112 Verwendung findet. Der Kunststoffmantel hat dafür zweckmäßig eine Form, die die Scheiben wie ein Rahmen umgibt, und Auflageflächen aufweist, auf die das Bindemittel aufgetragen werden kann. Andererseits werden die Scheibenwischervorrichtung, der Verriegelungsmechanismus und die Scharniere direkt mit dem metallischen Türrahmen über entsprechende Befestigungsmittel verbunden. Eine Türdichtung 114, die im Querschnitt hohlförmig ausgebildet sein kann und aus flexiblem Werkstoff besteht, ist noch mit der inneren Peripherie des Türrahmens 90 verbunden und liegt im geschlossenen Zustand der Kabinentür gegen die entsprechenden Rahmenteile der Türöffnung an.

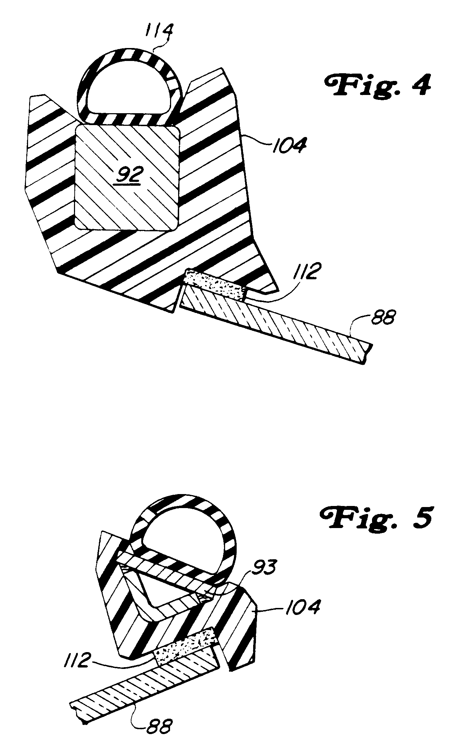

Die Fig. 4 und 5 zeigen, daß die entsprechenden Teile des Türrahmens nicht gleichmäßig von dem Kunststoffmantel umhüllt sind. Eine Einbettung, die scharfe metallische Kanten abdeckt, mag vollkommen genügen. Überhaupt bestimmt sich der jeweilige Querschnitt der Kunststoffummantelung nach der Funktion und nach der Ästhetik des Designs.

Die Kunststoffummantelung erlaubt ein sauberes Äußeres und deckt Schweißnähte und scharfe Kanten des Türrahmens ab. Es entsteht ein ansprechendes Erscheinungsbild. Der Kunststoff rostet nicht und kann kleinere Stöße ohne Beschädigungen auffangen. Der Stahlrahmen andererseits stabilisiert die Kabinentür ausreichend, wobei von den Scharnieren oder der Verriegelungseinrichtung ausgehende Kräfte unmittelbar in den metallischen Türrahmen eingeleitet werden. Der Stahlrahmen stellt auch sicher, daß sich die Kabinentür im Laufe ihres Einsatzes nicht verzieht, so daß sie auch nach langer Einsatzzeit stets gut abgedichtet bleibt.

## Patentansprüche

1. Kabinentür (70, 86) für eine Fahrzeugkabine (42), die Rahmenteile aufweist, die zumindest teilweise eine Türöffnung (68, 84) mit einem vertikal verlaufenden Element an einer Seite der Türöffnung (68, 84) und einem oberen horizontal verlaufenden Element über der Türöffnung (68, 84) definieren, wobei die Kabinentür (70, 86) einen metallischen und im wesentlichen nach innen offenen äußeren Türrahmen (90) mit einem im wesentlichen vertikal verlaufenden ersten und zweiten Seitenteil (93, 94) aufweist und über Scharniere (108, 110) an die Rahmenteile der Fahrzeugkabine (42) schwenkbar angeschlagen ist, dadurch gekennzeichnet, daß der Türrahmen (90) durch Gießen von einem Kunststoff umgeben ist, der innere großflächige Fensteröffnungen bildet, wobei dieser Kunststoffmantel Auflageflächen aufweist, mit denen die transparenten Fenstermittel (88, 89) verbunden sind.

2. Kabinentür nach Anspruch 1, dadurch gekennzeichnet, daß der zweite Seitenteil (94) des Türrahmens (90) mit einer Türverriegelung (107) versehen ist.

3. Kabinentür nach Anspruch 1 oder 2, dadurch gekennzeichnet, daß der Kunststoff ein Polymer und um den Türrahmen (90) gegossen ist.

4. Kabinentür nach Anspruch 3, dadurch gekennzeichnet, daß das Polymer ein Polyurethan ist.

5. Kabinentür nach einem oder mehreren der vorherigen Ansprüche, dadurch gekennzeichnet, daß der den Türrahmen (90) umgebende Kunststoff im Bereich seiner Fensteröffnungen so geformt ist, daß er die Fenstermittel (88, 89) von außen umgibt.

6. Kabinentür nach Anspruch 5, dadurch gekennzeichnet, die Fenstermittel (88, 89) mit dem Kunststoff verklebt sind.

## Claims

1. Cab door (70, 86) for a vehicle cab (42) comprising frame members which at least partially define a door opening (68, 84) with a vertically extending element on one side of the door opening (68, 84) and an upper horizontally extending element over the door opening (68, 84), wherein the cab door (70, 86) comprises a metal outer door frame (90) opening essentially inwardly, with essentially vertically extending first and second side members (93, 94), and is pivotably fastened by hinges (108, 110) to the frame members of the vehicle cab (42), characterised in that the door frame (90) is surrounded by casting with a plastic material which forms inner window openings of large area, wherein this plastic casing comprises bearing surfaces to which the transparent window means (88, 89) are connected.

2. Cab door according to claim 1, characterised in that the second side member (94) of the door frame (90) is provided with a door locking means (107).

3. Cab door according to claim 1 or 2, characterised in that the plastic material is a polymer and cast around the door frame (90).

4. Cab door according to claim 3, characterised in that the polymer is a polyurethane.

5. Cab door according to one or more of the preceding claims, characterised in that the plastic material surrounding the door frame (90) is shaped in the region of its window openings in such a way that it surrounds the window means (88, 89) from the outside.

6. Cab door according to claim 5, characterised in that the window means, (88, 89) are bonded to the plastic material.

## Revendications

1. Porte (70,86) pour une cabine (42) de véhicule, qui comporte des éléments de cadre, qui définissent au moins partiellement une ouverture de porte (68,84) comportant un élément vertical situé d'un côté de l'ouverture de porte (68,84) et un élément horizontal supérieur situé au-dessus de l'ouverture de porte (68,84), la porte de cabine (70,86) comportant un cadre de porte métallique extérieur (90) s'ouvrant essentiellement vers l'intérieur et comportant des première et seconde parties latérales essentiellement verticales (93,94) et qui est monté de manière à pouvoir pivoter, au moyen de charnières (108, 110), sur les éléments de cadre de la cabine (42) du véhicule, caractérisée en ce que le cadre de porte (90) est enveloppé par enrobage par une matière plastique, qui délimite des ouvertures intérieures de fenêtres de surface étendue, cette enveloppe en matière plastique possédant des surfaces d'appui, auxquelles sont reliés les moyens transparents formant fenêtres (88,89).

2. Porte de cabine selon la revendication 1, caractérisée en ce que la seconde porte (94) du cadre de porte (90) comporte un système de verrouillage de porte (107).

3. Porte de cabine selon la revendication 1 ou 2, caractérisée en ce que la matière plastique est un polymère et est moulée autour du cadre de porte (90).

4. Porte de cabine selon la revendication 3, caractérisée en ce que le polymère est un polyuréthane.

5. Porte de cabine selon une ou plusieurs des revendications précédentes, caractérisée en ce que la matière plastique entourant le cadre de porte (90) est conformée dans la zone des ouvertures formant fenêtres délimitée par cette matière plastique de telle sorte qu'elle entoure les moyens formant fenêtres (88,89) à partir de l'extérieur.

6. Porte de cabine selon la revendication 5, caractérisé en ce que les moyens formant fenêtres (88,89) sont collés à la matière plastique.
